# EUROPEAN PATENT APPLICATION

(11) **EP 3 720 151 A1**
(43) Date of publication of application: **07.10.2020**
(21) Application number: 17933850.4
(22) Date of filing: 01.12.2017
(51) Int. Cl.: H04W 4/02, G01S 5/00

(54) **POSITION-LOCATING ARRANGEMENT**

(71) Applicant: MYSPHERA, S.L., 46980 Paterna, Valencia (ES)
(72) Inventor: MONTÓN SÁNCHEZ, Eduardo, 46980 Paterna (ES); VERA MANERO, Salvador Enrique, 46980 Paterna (ES); HERNÁNDEZ CUARTERO, José Francisco, 46980 Paterna (ES); CASANOVA MURILLO, Marc, 46980 Paterna (ES)
(74) Representative: Elzaburu S.L.P.
(86) International application number: PCT/ES2017/070796
(87) International publication number: WO 2019/106211

(57) **Abstract**

The invention relates to a position-locating arrangement for detecting the position of a mobile object that can move inside a defined area and for processing data relative to the mobile object, said arrangement comprising a mobile identification tag (11) associated with the mobile object, and a stationary receiving device (12) configured to transmit a message from the stationary receiving device (12) to a position-locating server (13) in response to receiving an identification message and data broadcast by the mobile identification tag (11), the position-locating server (13), remote from the mobile identification tag (11), receiving the message from the stationary receiving device (11). The arrangement of the invention is suitable for remotely determining the position of the identification tag (11) inside the defined area and processing the data relative to the mobile object carrying same.

## Description

### OBJECT OF THE INVENTION

The present invention relates to a position-locating and characterisation arrangement for mobile objects, namely people and/or goods within a space delimited by the area of coverage of a wireless communications network, that makes it possible to reduce and optimise energy consumption in said communications network.

### STATE OF THE ART

The use of systems for sensing, position detecting and tracking of mobile objects within a facility is known in the state of the art.

The system for sensing and detecting the position of objects comprises a sensing and identification device to periodically broadcast unique identification and data messages relating to the object carrying same to a plurality of stationary receiving devices of a wireless communications network. The stationary receiving devices are installed at fixed locations within the space delimited by the area of coverage of the wireless communications network.

When a stationary receiving device of the plurality of stationary receiving devices receives a unique identification message with data relating to a mobile object, it transmits the unique identification message with data received to a processor device, which processes the unique identification and data messages to determine the location and to process the data relating to the mobile object that originates the unique identification and data message received, within the space delimited by the area of coverage of the wireless communications network.

The mobile devices for this type of network for real-time monitoring of mobile objects within confined environments consume energy, being supplied from a large battery, conditioning the final size of the device, such that that the size of the device is larger than a wristwatch-shaped type of device.

### SUMMARY

The present invention seeks to solve one or more of the disadvantages stated previously by means of a position-locating and characterising arrangement for mobile objects, as defined in the claims.

The position-locating and characterisation arrangement for mobile objects for determining the position and acquiring data from a mobile identification tag comprises a plurality of identification tags configured to transmit and receive identification and data messages to and from a plurality of stationary receiving devices by means of a first wireless communications system; the receiving devices are configured to transmit and receive, to and from a computer-based position-locating server, stationary receiving device messages, via a second communications system which has a higher transmission rate than the first communications system.

The mobile identification tag is configured to broadcast, in multicast, an identification and data message, including at least one unique mobile identification tag identification number and data relating to the mobile object which is carrying the mobile identification tag, to the plurality of stationary receiving devices.

The identification and data messages emitted periodically from the mobile identification tag are sent respectively within periodic uplink emission windows opened for this purpose, thus reducing the power consumption by the mobile identification tag.

The stationary receiving device is configured to receive an identification and data message broadcast from a mobile identification tag, to generate a stationary receiving device message, comprising the unique identification number and data extracted from the received identification and data message; the stationary receiving device identification number and the RF signal strength level at which the broadcast identification and data message was received; and it transmits the generated stationary receiving device message to the position-locating server, in response to receipt of an identification and data message received by the receiving device itself.

In summary, the stationary receiving devices act as a communications link between the mobile identification tags and the position-locating server to determine, at least, the position of the mobile identification tags carried by mobile objects within the area of coverage of the first wireless communications system and to receive data relating to the mobile object associated with the identification tag.

The stationary receiving device message comprises the unique identification number extracted from the identification message received; the data included in the identification message; the stationary receiving device identification number and an RF signal strength level at which the identification and data message was received by the stationary receiving device, namely the Received Signal Strength Indicator, RSSI.

The position-locating server is configured to determine the position of the mobile identification tag and to process the data included in the broadcast identification and data message.

The stationary receiving devices and the position-locating server are connected by means of the second communications system via a wired communications connection or via a wireless communications connection.

The first communications system does not have a roaming function or automatic transfer of a communication established between one or more stationary receiving devices to forward messages that have been broadcast by a mobile identification tag to the position-locating server.

The plurality of stationary receiving devices are located at fixed positions inside the area delimited by the area of coverage of the first wireless communications system; for example, within a hospital-type building to ensure that the position of any patient within said building can be determined.

The identification tag comprises a wireless input/output radio interface configured to receive and broadcast messages in the downlink and uplink directions of a communications channel established in the first wireless communications system.

The identification tag is usually in a deactivated or standby state, in which the power consumption is very low, and only enters an activated state, where the power consumption increases, to broadcast periodically, in the uplink direction of the communications channel, identification and data messages towards the plurality of stationary receiving devices. Once the broadcast of the identification and data message is complete, the identification tag switches from the activated state to a deactivated state to save power from the electrical power source included within the identification tag.

Similarly, in order to save energy in the identification tag, receiving of information in the identification tag itself takes place within periodic downlink receiving windows opened for that purpose.

The frequency of the uplink transmission windows and downlink receiving windows used by the identification tag to transmit and receive messages to and from the position-locating server respectively can be changed.

The identification tag has a magnetic sensor and/or push button adapted to transmit an identification frame and data to the position-locating server to open a receiving window in the tag. The periodicity-break frame is transmitted when a magnet is brought into proximity of the magnetic sensor or the push button is pressed, respectively.

The interaction of the magnetic sensor with the magnet or the pressing of the push button activates transmission of the identification and data message, opening a receiving window outside of the periodic receiving windows.

The position-locating server sends information to the identification tag through the stationary receiving devices, within the downlink-receiving window during an activated state, for example, for sending and receiving data that change the parameters of the periodicity of the sending and receiving of messages within the respective uplink transmission and downlink receiving windows relating to the identification tag for higher or lower energy consumption depending on the context of use of the identification tag.

The stationary receiving device comprises a first wireless communications unit configured to receive and send messages in the uplink and downlink direction of a communications channel established in the first wireless communications system, and it also comprises a second communications unit configured to receive and send messages in the downlink and uplink direction of a communications channel established in the second wireless or wired communications system.

Furthermore, the stationary receiving device comprises a detector unit configured to receive and measure the RF signal strength of the broadcast identification and data message and a processing unit configured to generate a stationary receiving device message comprising the unique identification number extracted from the identification and data message received, the data sent in the identification message; the stationary receiving device identification number and the RF signal strength level of the broadcast identification message received by the stationary receiving device.

The position-locating server comprises a first communications unit configured to receive and send messages in the uplink and downlink direction of a communications channel established in the second communications system; a locator unit to determine the position of the mobile identification tag on the basis of the information data extracted from a stationary receiving device message received through the third communications unit; and a data processing unit to process the data sent in the identification message concerning the mobile object that carries the identification tag.

In summary, the position-locating arrangement for detecting the position of a mobile object that can move inside a delimited area comprises: a mobile identification tag associated with the mobile object, a stationary receiving device configured to transmit a stationary receiving device message to a position-locating server in response to receipt of an identification and data message broadcast from the mobile identification tag corresponding to the position of the identification tag itself, a position-locating server remote from the mobile identification tag configured to receive the stationary receiving device message; such that the stationary receiving device is configured to receive an identification and data message broadcast from a mobile identification tag, to generate a stationary receiving device message comprising the unique identification number extracted from the identification and data message received; the stationary receiving device identification number and the RF signal strength level of the broadcast identification and data message; and to transmit the generated stationary receiving device message to the position-locating server; the position-locating server is adapted to determine the position of the identification tag remotely inside the delimited area and to process the data relating to the mobile object.

The mobile identification tag comprises a radio transceiver configured to broadcast, in multicast, a periodic identification and data message, including a unique identification number, to the stationary receiving device, when the identification tag switches from a deactivated state to an activated state.

The mobile identification tag periodically broadcasts unique identification and data messages to stationary identification devices within a configurable sending period.

The mobile identification tag comprises a magnetic sensor adapted to allow the isolated transmission of an identification and data frame to open a receiving window in the position-locating server outside of the periodic windows when a magnet is brought into proximity of the magnetic sensor itself, such that the magnetic sensor generates a command signal to send the frame and open the receiving window isolatedally.

The mobile identification tag comprises a push button adapted for isolated sending of an identification frame and data to open a receiving window outside of the periodic windows.

Summarising, the mobile identification tag opens and closes periodic windows for transmitting identification and data frames in the uplink and receiving configuration messages from the position-locating server, offering a mechanism for isolated sending and receiving by means of opening transmission and receiving windows by activation of the magnetic sensor and the push button included in the mobile identification tag.

The mobile identification tag includes a battery to power the mobile identification tag, which normally operates in low consumption mode until the mobile identification tag changes from the deactivated to the activated state, whether periodically, by activating the magnetic sensor or by pressing the push button, thus conserving battery life.

The mobile identification tag comprises a plurality of sensors to provide data relating to the mobile object that carries it; of the temperature, humidity, accelerometer or similar data type; with the data generated by the sensors being sent within the payload of the identification and data message.

The mobile identification tag includes an attachment feature configured to affix the identification tag to the mobile object.

### BRIEF DESCRIPTION OF THE FIGURES

A more detailed explanation of the invention is given in the following description based on the attached figures:
Figure 1 shows a block diagram of a position-locating and characterising arrangement for mobile objects to which a mobile identification tag has been attached;
Figure 2 shows the transmission of a periodic identification and data message/frame from the mobile identification tag to a position-locating server of the position-locating and characterising arrangement for mobile objects; and
Figure 3 shows a communications flow diagram, including the periodic transmission and receiving windows, of the position-locating and characterising arrangement for mobile objects.

### DESCRIPTION

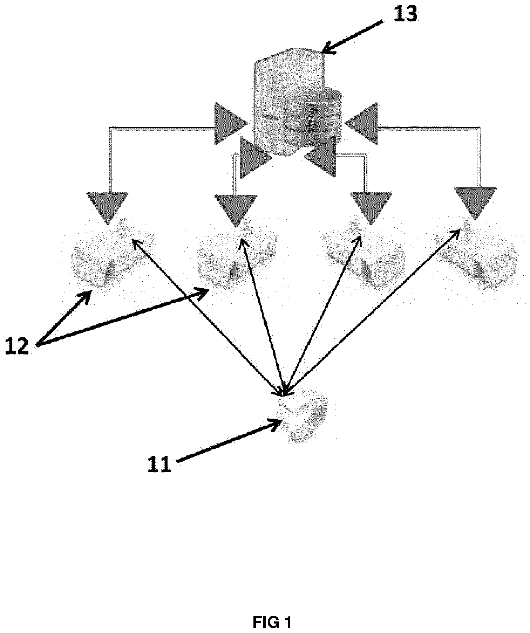

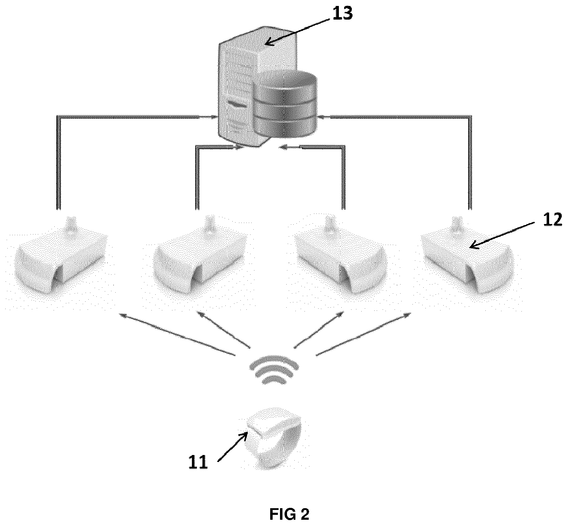

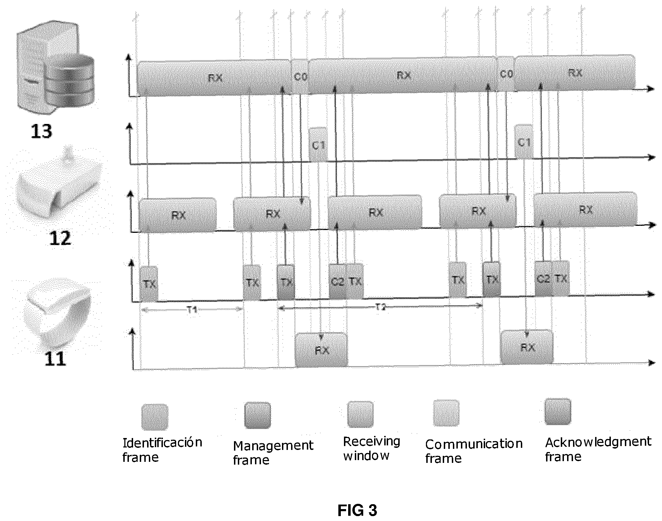

Regarding figures 1 to 3, these show a position-locating and characterising arrangement to determine the position of a mobile identification tag 11 associated with a mobile object which can move within the area of coverage of a first wireless communications system.

The position-locating arrangement comprises a plurality of identification tags 11, with each identification tag 11 being configured to transmit and receive to and from a plurality of stationary devices 12 for receiving periodic identification and data messages via the first wireless communications system; in addition, each stationary receiving device 12 is configured to transmit and receive, to and from a computer-based position-locating server 13, stationary receiving device messages via a second communications system which has a transmission rate different from the transmission rate of the first wireless communications system, for the purpose of determining the position of the identification tags 11 within the area delimited by the coverage of the first wireless communications system and for processing the data relating to the mobile object.

The mobile identification tag 11 comprises a radio transceiver configured to broadcast, in multicast, periodic identification and data messages, including a unique identification number and data relating to the mobile object carrying the mobile identification tag, to the plurality of stationary receiving devices 12, when said tag 11 switches from a deactivated state to an activated state.

The periodic identification and data messages are broadcast through the first wireless communications system in the uplink direction of a communications channel established over the first wireless communications system.

The mobile identification tag 11 comprises a motion sensor configured to provide a motion signal such that the periodicity with which the periodic identification and data messages are broadcast is a function of the motion signal; i.e. as the speed of the movement of the mobile identification tag increases, the period of time between the broadcast of one transmitted periodic identification message and the next periodic identification message transmitted is shorter than the period of time between the broadcast of one transmitted periodic identification message and the following second periodic identification message transmitted when the mobile identification tag 11 is parked or stopped, in order to reduce the power consumption of a power supply included within the mobile identification tag.

The mobile identification tag 11 also comprises a magnetic sensor configured such that the tag itself switches from a deactivated state to an activated state when a magnet brought into proximity of the mobile identification tag 11, i.e. when the mobile identification tag 11 changes from the deactivated state to an activated state due to the magnetic sensor, it broadcasts at least one isolated identification and data message to the plurality of stationary receiving devices 12, and opens a similarly isolated receiving window, and it then returns to the deactivated state to save power from the mobile identification tag power supply.

The periodic identification and data message is broadcast as a radio signal and will be received by all of the stationary receiving devices 12 that receive a sufficiently strong radio signal.

The mobile identification tag 11 sends, in multicast (broadcast) mode, the identification and data message, which is received by the stationary receiving devices 12 within their corresponding areas of coverage; each stationary receiving device 12 which has received the identification and data message broadcast by the mobile identification tag 11 establishes communication with the position-locating server 13 to transmit a stationary receiving device message, including identification information, data, and RSSI.

If the same identification and data message is received simultaneously by the server from several stationary receiving devices 12, the server 13 uses the various RSSIs to calculate the position of the mobile identification tag 11.

In addition, it uses the data from the first message received, discarding the data from the other messages, to process the data relating to the mobile object that is carrying the mobile identification tag 11, for example, temperature level, alarm, battery level, etc.

The mobile identification tag 11 periodically broadcasts unique identification and data messages to the stationary identification devices. The sending period is configurable.

The identification tag 11 comprises a magnetic sensor that enables the tag to be configured to send an identification message with data outside the configurable sending period.

When a magnet is brought into proximity of the identification tag 11, the magnetic sensor is triggered, generating an event; this event is processed by the identification tag 11 such that it transmits a unique identification and data message and opens a receiving window.

The identification tag 11 comprises a push button that enables the tag to be configured to transmit an identification message with data and to open a receiving window outside the configurable sending period.

When a user presses the push button on the identification tag 11, said tag transmits an identification and data message.

The identification tag 11 also comprises at least one sensor for generation of data relating to the mobile object carrying it; temperature, humidity, accelerometer or similar type data. The plurality of sensors generate data that are sent within the payload of the identification and data message.

The stationary receiving device 12 is configured to transmit a stationary receiving device message to the position-locating server 13 in the uplink direction of a communications channel established over the second wireless communications system, in response to the receipt of an identification and data message broadcast from any identification tag.

The stationary receiving devices 12 act as a communications link between the mobile identification tags 11 and the position-locating server 13 to determine the position of the mobile identification tags 12, carried by mobile objects, within the area of coverage of the first wireless communications system.

The stationary receiving device 12 comprises a first wireless communications unit configured to receive and send messages in the uplink and downlink direction of a communications channel established in the first wireless communications system, to and from the identification tag 11, and it also comprises a second communications unit configured to send and receive messages in the uplink and downlink direction of a communications channel established in the second communications system, to and from the position-locating server 13.

Furthermore, the stationary receiving devices 12 comprise a detector unit configured to detect the RF signal strength of the broadcast identification and data message and a processing unit configured to generate a message from the stationary receiving device 12 comprising the unique identification number, extracted from the identification message received; the stationary receiving device identification number and the RF signal strength level of the broadcast identification message received by the stationary receiving device 12.

The stationary receiving device message comprises the unique identification number extracted from the identification message received; data relating to the mobile object also included in the identification message received; the stationary receiving device identification number and an RF signal strength level at which the identification and data message was received by the first wireless communications unit of the stationary receiving device, namely the Received Signal Strength Indicator, RSSI.

The position-locating server 13 is configured to determine the position of the mobile identification tag 11 which broadcast the identification and data message, and to process the data broadcast from the identification tag 11.

The position-locating server 13 comprises a second communications unit configured to receive and send messages in the uplink and downlink direction of a communications channel established in the second communications system, to and from the stationary receiving devices 12; and a locator unit to determine the position of the mobile identification tag on the basis of the information data extracted from a stationary receiving device message received through the third communications unit.

The mobile identification tag 11 broadcasts, in multicast, periodic identification and data message frames, including a unique identification number and data relating to the mobile object, to the plurality of stationary receiving devices 12, within the uplink transmission window corresponding to the activated state of said tag; establishing communication with the position-locating server 13 through at least one first stationary receiving device 12. If the position-locating server 13 receives the same message from different stationary receiving devices 12, it processes the data only from the first message received and uses the RSSI data from all of the messages to calculate the position. This mode of operation is maintained as the mobile identification tag 11 moves within the area of coverage of the first wireless communications system.

According to the above, all of the stationary receiving devices 12 that receive the periodic identification and data message broadcast will generate and transmit the corresponding stationary receiving device 12 message; with the position-locating server 13 using, at each instant, the first stationary receiving device message for processing of the data relating to the object carrying the tag 11, and all of the RSSIs received being used for calculation of the location.

Therefore, the position-locating server 13, at each instant, processes the first stationary receiving device message to process the data, and all of the stationary device messages to determine the position of the mobile identification tag.

The stationary receiving devices 12 and the position-locating server 13 are connected by means of the second communications system via a wired communications connection or via a wireless communications connection.

Consequently, the first communications system does not have a roaming function or automatic transfer of a communication established between a first and a second stationary receiving device to maintain the communications established between the position-locating server and the first mobile identification tag which broadcast the periodic identification and data message.

The plurality of stationary receiving devices 12 are located at fixed positions inside the area delimited by the area of coverage of the first wireless communications system; for example, within a hospital-type building to ensure that the position of any patient within said building can be determined.

The identification tag 11 also broadcasts non-periodic event messages to inform the position-locating server 13, for example, of the power supply or battery level or other information regarding the status of the mobile identification tag 11.

The position-locating server 13 transmits an event message frame within a periodic downlink receiving window; for example, a message to change the configuration of the periodic windows.

The position-locating arrangement 12 determines the location of a mobile identification tag in a monitored area; for example, it specifically identifies the location, room or area of a patient within a health care facility. The patient physically carries the identification tag.

The stationary receiving devices 12 can be connected to a communications network belonging to the health care facility.

## Claims

1. A position-locating and characterising arrangement for determining the position of a mobile object that can move inside a delimited area relative to the position-location arrangement comprising: a mobile identification tag (11) associated with the mobile object, a stationary receiving device (12) configured to transmit a stationary receiving device message to a position-locating server (13) in response to receipt of an identification and data message broadcast from the mobile identification tag (11) corresponding to the position of the identification tag itself, the position-locating server (13) remote from the mobile identification tag (11) is configured to receive the message from the stationary receiving device (12); **characterised in that** the stationary receiving device (12) is configured to receive a periodic identification and data message broadcast from a mobile identification tag(11); to generate a stationary receiving device message, comprising the unique identification number and data relating to the mobile object that carries the mobile identification tag (11), extracted from the identification and data message received; the stationary receiving device identification number and the RF signal strength level of the broadcast identification and data message; and to transmit the generated stationary receiving device message to the position-locating server (13); with said server being adapted to determine the position of the identification tag remotely inside the delimited area and to process the data relating to the mobile object associated with the mobile identification tag (11).

2. The arrangement according to claim 1, **characterised in that** the mobile identification tag (11) comprises a radio transceiver configured to broadcast, in multicast, periodic identification and data messages, including a unique identification number, to the stationary receiving device (12), when the identification tag switches from a deactivated state to an activated state.

3. The arrangement according to claim 2, **characterised in that** the mobile identification tag (11) periodically broadcasts unique identification and data messages to the stationary receiving devices (12) within a configurable periodic uplink transmission window.

4. The arrangement according to claim 2, **characterised in that** the mobile identification tag (11) comprises a magnetic sensor to couple the mobile identification tag (11) to a magnet to send an identification and data frame and to open a isolated receiving window when the magnet is brought into proximity of said magnetic sensor and coupled magnetically to the same.

5. The arrangement according to claim 4, **characterised in that** the magnetic sensor is configured to generate a command signal to send an identification and data frame and open a isolated receiving window.

6. The arrangement according to claim 3, **characterised in that** the mobile identification tag (11) comprises a push button configured to send an identification and data frame and to open a isolated receiving window when the push button is activated by pressing it.

7. The arrangement according to claim 2, **characterised in that** the mobile identification tag (11) includes a battery to power the mobile identification tag (11) which normally operates in standby mode until the mobile identification tag (11) switches from a deactivated state to an activated state periodically or isolatedally by means of the magnetic sensor or push button.

8. The arrangement according to claim 1, **characterised in that** the mobile identification tag (11) includes a plurality of sensors to supply data relating to the mobile object to which it is attached; such as the temperature, humidity, accelerometer or similar data; with the data generated by the sensors being sent within the payload of the identification and data message.

9. The arrangement according to claim 1, **characterised in that** the mobile identification tag (11) includes an attachment feature configured to affix the identification tag to the mobile object.

10. The arrangement according to claim 1, **characterised in that** the position-locating server (13) is configured to process the data received relating to the object carrying the mobile identification tag (11).
